(19) Europäisches Patentamt
European Patent Office
Office européen des brevets

(11) **EP 1 680 282 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(51) Int Cl.:
**B44C 1/17** *(2006.01)*    **B42D 15/10** *(2006.01)*
**G07D 7/12** *(2006.01)*

(21) Anmeldenummer: **04764969.4**

(22) Anmeldetag: **08.09.2004**

(86) Internationale Anmeldenummer:
**PCT/EP2004/010028**

(87) Internationale Veröffentlichungsnummer:
**WO 2005/037570 (28.04.2005 Gazette 2005/17)**

(54) **SICHERHEITSELEMENT MIT FLÜSSIGKRISTALLINEM MATERIAL**

SECURITY ELEMENT WITH A LIQUID CRYSTALLINE MATERIAL

ELEMENT DE SECURITE AVEC UN MATERIAU A CRISTEAUX LIQUIDES

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.09.2003 DE 10343547**

(43) Veröffentlichungstag der Anmeldung:
**19.07.2006 Patentblatt 2006/29**

(73) Patentinhaber: **Giesecke & Devrient GmbH**
**81677 München (DE)**

(72) Erfinder:
• **PILLO, Thorsten**
**83607 Holzkirchen (DE)**
• **LIEBLER, Ralf**
**82703 Gmund (DE)**
• **HEIM, Manfred**
**81379 München (DE)**
• **BURCHARD, Theodor**
**83703 Gmund (DE)**
• **SCHÜTZMANN, Jürgen**
**85276 Pfaffenhofen (DE)**

(56) Entgegenhaltungen:
**EP-A- 0 435 029    EP-A- 1 203 968**
**DE-A- 2 212 350    DE-A- 19 941 295**

**Beschreibung**

Die Erfindung betrifft ein Sicherheitselement zur Absicherung von Wertgegenständen, das ein flüssigkristallines Material aufweist. Ferner betrifft die Erfindung einen Wertgegenstand und ein Verfahren zur Herstellung derartiger Sicherheitselemente.

Bei einem Wertgegenstand im Sinne der Erfindung kann es sich um jeden zu schützenden Gegenstand, wie beispielsweise Markenartikel oder Wertdokumente, handeln. Wertgegenstände im Sinne der vorliegenden Erfindung sind insbesondere Sicherheitsdokumente wie Banknoten, aber auch Aktien, Urkunden, Briefmarken, Schecks, Scheckkarten, Kreditkarten, Ausweise, Pässe, Eintrittskarten, Fahrkarten, Flugscheine und Visasticker sowie Etiketten, Siegel, Verpackungen, Sicherheitspapier oder andere Elemente für die Produktsicherung. Die vereinfachende Benennung "Wertgegenstand" oder "Sicherheitselement" schließt deshalb im Folgenden stets Dokumente der genannten Art ein.

Aus der DE 199 41295 A1 ist ein Sicherheitselement mit flüssigkristallinem Material bekannt, welches thermochrome Eigenschaften aufweist. Bei Erwärmung verändert das thermochrome flüssigkristalline Material seine Farbe bzw. wird transparent, so daß das Sicherheitselement von einem Betrachter als solches erkannt werden kann.

Ein Problem derartiger Sicherheitselemente mit flüssigkristallinem thermochromen Material besteht darin, daß zur Erzielung des thermochromen Effekts eine bestimmte Temperaturdifferenz erforderlich ist. Jedoch ist es nicht in jeder Situation möglich, eine ausreichend große Temperaturdifferenz zu erzeugen, weshalb die erwartete Farbänderung nicht auftritt.

Dokument EP 0 435 029 A2 (=D1) beschreibt einen Datenträger, wie eine Ausweiskarte oder ein Wertpapier, der ein optisch variables Sicherheitselement aus einem Flüssigkristallmaterial enthält. Das Sicherheitselement weist eine kunststoffähnliche Schicht aus einem Flüssigkristallpolymer auf, die bei Raumtemperatur ein ausgeprägtes Farbwechselspiel zeigt.

Dokument EP 1203 968 A1 (=D2) beschreibt ein optisches Laminat, umfassend ein Substrat, eine Klebschicht, eine Schicht aus cholesterischem Flüssigkristall und eine Schutzschicht. Die Flüssigkristallschicht hat zumindest in einem Teil einen Bereich, der Brechung zeigt.

Der Erfindung liegt daher die Aufgabe zugrunde, einen Wertgegenstand und ein Sicherheitselement zu schaffen, deren Überprüfung temperaturunabhängig erfolgen kann und sowohl visuell als auch maschinell leicht durchführbar ist. Zudem sollen der Wertgegenstand und das Sicherheitselement besonders einfach herzustellen sein und einen hohen Fälschungsschutz gewährleisten.

Weiterhin ist es Aufgabe der Erfindung, ein Verfahren zur Herstellung eines derartigen Sicherheitselements bereitzustellen.

Diese Aufgaben werden durch die Merkmale der unabhängigen Ansprüche gelöst. Weiterbildungen sind Gegenstand der Unteransprüche.

Gemäß der Erfindung weist das Sicherheitselement mindestens ein flüssigkristallines Material auf, wobei das Material eine lineare Polarisierung von Licht bewirkt und/oder dichroitisch mit richtungsabhängigem Brechungsindex wirkt, wobei das flüssigkristalline Material von einem Lyotropen Flüssigkristall gebildet wird.

Durch Überprüfen, ob vom Sicherheitselement remittiertes und/oder transmittiertes Licht polarisiert und/oder dichroitisch verändert ist, kann die Echtheit des Sicherheitselements unabhängig von der umgebenden Temperatur bzw. von zu erzeugenden Temperaturdifferenzen mit großer Sicherheit überprüft werden. Die Verbesserung der Fälschungssicherheit ergibt sich vor allem durch die Verwendung polarisierender flüssigkristalliner Materialien, da derartige Materialien entweder aufwendig in der Herstellung sind oder nicht ohne weiteres im Handel bezogen werden können, andererseits aber im Gegensatz zu normalen, zu dicken und steifen Polarisationfolien an die zu schützenden Objekte angepasst und mit Methoden verarbeitet werden können, welche ähnlich denen sind, die bei Sicherheitsdrucken bereits angewandt werden.

Es werden als flüssigkristallines Material lyotrope Flüssigkristalle eingesetzt. Dabei wird eine lyotrope Flüssigkristalle enthaltende Lösung unter Aufwendung von Scherkräften auf mindestens eine Oberfläche des Sicherheitselements aufgebracht. Bevorzugt wird dabei eine Schichtdicke von einigen $\mu$m aufgebracht, welche, nach der Verdunstung des Lösungsmittels, zu einer verbleibenden Schichtdicke von 10 bis 1000 nm führt. Herkömmliche Polarisationsfolien haben Dicken von mindestens 0,1 mm.

Für die erfindungsgemäßen flüssigkristallinen Materialien bieten sich im Rahmen der Erfindung zahlreiche Variationsmöglichkeiten. So kann das flüssigkristalline Material vollflächig oder vorzugsweise nur bereichsweise, insbesondere in Form von Zeichen oder Mustern, vorgesehen sein.

Das Sicherheitselement kann entweder direkt auf dem Wertgegenstand erzeugt oder auf einem separaten Substrat vorbereitet werden. Der Wertgegenstand bzw. das separate Substrat, auf dem sich das Sicherheitselement befindet, ist dabei im Bezug auf das verwendete Material in keiner Weise eingeschränkt. Bevorzugt handelt es sich aber um Papier oder Kunststoff, auch in Form von Folien. Bei einem separaten Substrat kann das Sicherheitselement beispielsweise als selbsttragendes Etikett, bevorzugt auf einem Kunststoffsubstrat, ausgebildet sein. Insbesondere ist das Sicherheitselement in Form eines Sicherheitsfadens, besonders bevorzugt als Fensterfaden, ausgebildet. Letzterer gestattet eine besonders augenfällige visuelle Prüfung durch den Vergleich von Bereichen mit polarisiertem und solchen mit unpolarisiertem Licht.

Da es in einigen Fällen Schwierigkeiten bereiten kann, den Wertgegenstand direkt mit der jeweiligen Schichtfolge zu versehen, kann es alternativ sinnvoll sein, den Schichtaufbau des Sicherheitselements zumindest teilweise auf einem Transfermaterial vorzubereiten.

Sofern die gesamte Schichtfolge des Sicherheitselements auf einem Transfermaterial vorbereitet wird, ist darauf zu achten, daß der in den jeweiligen Figuren gezeigte Schichtaufbau in der umgekehrten Reihenfolge auf dem Trägerband des Transfermaterials vorbereitet werden muss. Der Schichtaufbau des Sicherheitselements kann dabei in Endlosform auf dem Trägerband vorbereitet werden. Die Befestigung als Sicherheitselement auf einem zu sichernden Wertgegenstand erfolgt dabei mit Hilfe einer Klebstoffschicht, die entweder auf den Wertgegenstand oder aber auf die oberste Schicht des Transfermaterials aufgebracht wird. Vorzugsweise wird hierfür ein Heißschmelzkleber verwendet. Um die Umrissform des Sicherheitselements festzulegen, kann entweder nur in den zu übertragenden Bereichen eine Klebstoffschicht vorgesehen werden oder der Klebstoff, wie beispielsweise ein Heißschmelzkleber, wird nur in den zu übertragenden Bereichen aktiviert. Nach dem Übertrag wird das Trägerband des Transfermaterials abgezogen und lediglich der gezeigte Schichtaufbau des Sicherheitselements verbleibt auf dem zu sichernden Wertgegenstand.

Bei dem Wertgegenstand, auf welchen das Sicherheitselement aufgebracht wird, kann es sich beispielsweise um ein Sicherheitspapier, ein Sicherheitsdokument, aber auch um Produktverpackungen handeln. Auch andere Wertgegenstände, die eine sicherheitstechnische Absicherung benötigen, können selbstverständlich mit dem erfindungsgemäßen Sicherheitselement versehen werden.

Vorzugsweise ist das Sicherheitselement in seiner Gesamtheit auf der Oberfläche des zu sichernden Gegenstandes angeordnet. Wenn das Sicherheitselement vollständig auf der Oberfläche des Gegenstandes angeordnet ist, kann es wesentlich großflächiger ausgeführt werden, so daß der optische Effekt des flüssigkristallinen Materials aufgrund der größeren Fläche wesentlich augenfälliger ist.

Weitere Vorteile und Ausführungsformen der Erfindung werden anhand der Figuren näher erläutert. Die in den Figuren gezeigten Proportiorien (insbesondere Schichtdicken) entsprechen nicht unbedingt den in der Realität vorliegenden Verhältnissen und dienen vornehmlich zur Verbesserung der Anschaulichkeit.

Die Erfindung wird aus Gründen der Übersichtlichkeit nur am Beispiel einer Banknote näher erläutert. Es ist aber offensichtlich, daß die Erfindung ohne weiteres für die oben erwähnten Wertgegenstände verwendet werden kann.

Es zeigt:

Figur 1       eine Banknote mit einem erfindungsgemäßen Sicherheitselement,

Figur 2, 3       verschiedene Ausführungsformen des Sicherheitselements nach Figur 1 im Querschnitt,

Figur 4       eine Ausführungsform des Sicherheitselements gemäß Figur 1 in Aufsicht,

Figur 5, 6       verschiedene Ausführungsformen des Sicherheitselements nach Figur 4 im Querschnitt,

Figur 7       eine Ausführungsform einer Banknote mit einem erfindungsgemäßen Sicherheitselement,

Figur 8, 9, 10       Vorrichtungen für die Überprüfung von Banknoten mit erfindungsgemäßem Sicherheitselement,

Figur 11 bis 17       Ausführungsformen von erfindungsgemäßen Sicherheitselementen bzw. Wertgegenständen, und

Figur 18       eine Vorrichtung für die Prüfung von Wertgegenständen mit einem erfindungsgemäßen Sicherheitselement.

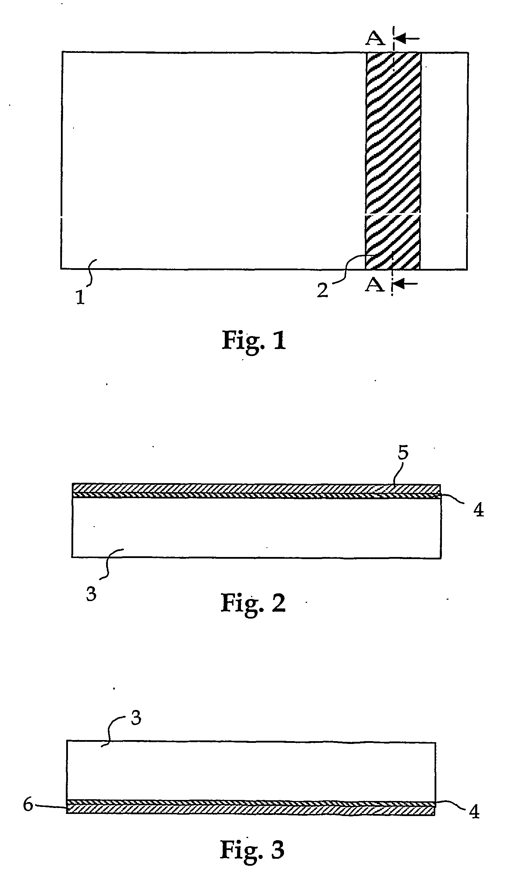

Figur 1 zeigt eine Banknote 1 aus Papier oder Kunststoff, die mit einem über die gesamte Breite der Banknote 1 verlaufenden Sicherheitselement 2 in Form eines Streifens versehen ist. Die Banknote 1 kann selbstverständlich weitere Sicherheitsmerkmale, wie Wasserzeichen, Stahltiefdruck, Sicherheitsfaden, lumineszierende und/oder magnetische Aufdrucke aufweisen.

Das Sicherheitselement 2 weist eine flüssigkristalline Schicht auf. Die flüssigkristalline Schicht des Sicherheitselements 2 weist mindestens ein flüssigkristallines Material auf, das eine lineare Polarisierung von Licht bewirkt und/oder Licht dichroitisch mit richtungsabhängigem Brechungsindex verändert. Das Sicherheitselement 2 ist vollständig auf der Oberfläche der Banknote 1 angeordnet, so daß der Licht polarisierende und/oder dichroitisch verändernde Effekt der vorzugsweise in Mustern und/oder Zeichen aufgebrachten flüssigkristallinen Schicht sehr gut erkennbar ist. Die Muster und/oder Zeichen können lineare Polarisierungen bewirken, die unter-schiedliche Orientierung aufweisen. Durch Überprüfen, ob und in welcher Richtung vom Sicherheitselement 2 remittiertes und/ oder transmittiertes Licht polarisiert und/oder dichroitsch verändert ist, kann die Echtheit des Sicherheitselements 2 mit großer Sicherheit überprüft werden.

Es werden als flüssigkristallines Material lyotrope Flüssigkristalle eingesetzt. Als lyotrope Flüssigkristalle bezeichnet man von organischem Material gebildete Flüssigkristalle, die sowohl in einer beispielsweise wässrigen Lösung, als auch nach der Entfernung des Lösemittels flüssigkristalline Eigenschaften aufweisen. Vorteilhaft wird eine lyotrope Flüssigkristalle enthaltende Lösung unter Aufwendung von Scherkräften auf mindestens eine Oberfläche des Sicherheitselements aufgebracht. Bevorzugt wird dabei eine Schichtdicke von einigen μm aufgebracht, welche, nach der Verdunstung des Lösungsmittels, zu verbleibenden Schichtdicken von 10 bis 1000 nm führt. Die nach der Verdunstung des Lösungsmittels verbleibende Schicht weist in supramolekularen Komplexen geordnete Lagen des organischen Materials, beispielsweise Polymere, auf. Die Flächen der Moleküle sowie deren Dipolmomente der optischen Transmission sind senkrecht zur Achse der makroskopischen Orientierung der verbliebenen Schicht orientiert. Die Polarisationsrichtung der verbliebenen Schicht entspricht somit der Richtung der bei der Aufbringung der die lyotropen Flüssigkristalle enthaltenden Lösung angewendeten Scherkraft.

Derartige lyotrope Flüssigkristalle haben zum Teil Polarisationsspektren die keine Polarisation aufweisen und deshalb selbst bei einem gegenüber der Polarisationsrichtung der Flüssigkristalle gekreuzten Analysator einen bestimmten Spektralanteil transmittieren, so daß Licht, mit welchem das Sicherheitselement 2 bestrahlt wird, nach der Transmission durch die Schicht der lyotropen Flüssigkristalle bzw. das von der Schicht der lyotropen Flüssigkristalle reflektierte Licht, neben einer linearen Polarisierung eine bestimmte Farbe aufweist, z. B. rot, violett oder blau. Weitere Farben sind möglich, z. B. auch im nicht sichtbaren Bereich des Lichts. Insbesondere kann auch eine Polarisierung von infrarotem oder ultraviolettem Licht erreicht werden. Die Polarisierung oder Nichtpolarisierung bestimmter Wellenlängenbereiche (Farben) kann also selektiv erfolgen. Durch eine Analyse sowohl der Polarisation als auch der Restfarbe bei gekreuzten Polarisatoren ist eine besonders sichere Bestimmung des Sicherheitselements möglich.

Nähere Angaben zur Herstellung und Aufbringung der lyotropen Flüssigkristalle können aus US 5,739,296, US 6,049,428 und WO 02/087782 A1 entnommen werden.

Der beschriebene Farbeffekt auf Licht, das durch das Sicherheitselement 2 transmittiert wird, kann besonders gut wahrgenommen werden, wenn zur Betrachtung als Analysator ein Linearpolarisator verwendet wird, dessen Polarisationssrichtung um 90° zu der Polarisationsrichtung der flüssigkristallinen Schicht des Sicherheitselements 2 gedreht ist. Der selbe Effekt kann erzielt werden, wenn bereits das für die Beleuchtung des Sicherheitselements 2 verwendete Licht mittels eines Linarpolarisators linar polarisiert wird, dessen Polaristionssrichtung um 90° zu der Polarisationssrichtung der flüssigkristallinen Schicht des Sicherheitselements 2 gedreht ist. Die für den Nachweis verwendeten, oben beschriebenen Polarisatoren können vorteilhaft ebenfalls mit den für das Sicherheitselement 2 verwendeten lyotropen Flüssigkristallen hergestellt werden.

Da der beschriebene Farbeffekt auf der Absorption des in einem bestimmten Spektralbereich linear polarisierten vom Sicherheitselement kommenden Lichts im Analysator beruht, wird bei Einbettung des Sicherheitselements in ein streuendes Substrat wie Banknotenpapier oder seiner Anordnung auf der Rückseite des Substrats die Polarisation aufgehoben und damit auch der Farbeffekt. Durch teilweises Einbetten des Sicherheitselements in das Substrat wie bei einem sog. Fenster-Sicherheitsfaden hat man bei paralleler Orientierung der Polarisationsrichtung des Analysators einen nur geringen Helligkeits- und Farbunterschied zwischen den eingebetteten und den frei liegenden Bereichen des Sicherheitselements, bei um 90° verdreht einen sehr auffälligen.

Neben der beschriebenen flüssigkristallinen Schicht kann das Sicherheitselement 2 auch weitere Schichten aufweisen, die allein oder in Kombination mit anderen Schichten des Sicherheitselements 2 weitere auffällige optische Effekte erzeugen.

Einige bevorzugte Ausführungsformen werden anhand der Figuren 2 und 3 näher erläutert, welche die Banknote 1 im Querschnitt entlang der strichpunktierten Linie A - A zeigen, um den Schichtaufbau des Sicherheitselements 2 zu verdeutlichen.

Gemäß Figur 2 wird das Papier- oder Kunststoffsubstrat 3 der Banknote 1, das eine weiße oder helle Eigenfarbe aufweist, mit einer lyotropen flüssigkristallinen Schicht 4 in Form von Zeichen oder Mustern versehen. Um die Aufbringung der lyotropen flüssigkristallinen Schicht 4 zu verbessern, kann es insbesondere bei einem Papiersubstrat 3 vorgesehen sein, daß eine sogenannte Primerschicht auf das Papiersubstrat 3 aufgebracht wird. Bei der Primerschicht kann es sich beispielsweise um eine farblose Kunststoff- oder um eine Farbschicht handeln, deren Oberfläche nur eine geringe Rauhigkeit aufweist.

Bei bestimmten Ausführungsformen, z.B. Sicherheitselementen, die im Gebrauch einer starken mechanischen oder chemischen Belastung ausgesetzt sind, bietet es sich an, die flüssigkristallinen Materialien mit einer Schutzschicht 5 abzudecken. Bei der Schutzschicht 5 kann es sich um eine über das Sicherheitselement 2 laminierte Folie oder eine Schutzlackschicht handeln. Die Schutzlackschicht kann dabei vollflächig oder in Teilflächen aufgebracht werden. Dazu können z.B. UV-Lacke, Hybridlacke, Öldrucklacke oder Dispersionslacke vom Ein- bzw. Zweikomponententyp eingesetzt werden. Die Schutzlackschicht wird vorzugsweise aufgedruckt, z.B. mittels Flexodruck oder Offsetdruck.

Das Sicherheitselement 2 kann auch ein separates Element sein, das auf die Banknote aufgebracht werden kann. Das separate Sicherheitselement 2 kann einen Aufbau aufweisen, der dem anhand Figur 2 beschriebenen Aufbau entspricht. In diesem Fall wird das Substrat 3, z. B. eine transparente Kunststofffolie, des Sicherheitselements 2 auf die Banknote 1 aufgeklebt. Dazu kann der das Substrat 3 bildende Kunststoff ein Heißschmelzkleber sein.

In Figur 3 ist eine Variante des separaten Sicherheitselements 2 dargestellt. Auf ein Substrat 3, z. B. eine transparente Kunststofffolie, wird eine lyotrope flüssigkristalline Schicht 4 aufgebracht. Auf die flüssigkristalline Schicht 4 wird schließlich eine Klebeschicht 6 aufgebracht, mit welcher das Sicherheitselement 2 auf der Banknote 1 befestigt wird. Der dazu verwendete Kleber kann ein Heißschmelzkleber sein. Der Kleber kann statt auf das Sicherheitselement 2 auch auf die Banknote 1 aufgebracht werden, um das Sicherheitselement 2 auf der Banknote 1 zu befestigen.

Besteht die Folie 3 aus doppelbrechendem Material (z. B. gereckte PolymerFolie) mit der richtigen Orientierung und Phasenverschiebung (Viertelwellenlängenplatte), so wirkt der Verbund nach Abbildung 2 oder 3 je nach Schichtfolge für transmittiertes Licht als Linear- oder als Zirkular- (allgemeiner elliptischer) Polarisator. Daraus ergeben sich (z.B. bei der Verwendung als Durchsichtfenster) unterschiedliche Polarisationen und Prüfmöglichkeiten in den beiden möglichen Transmissions- bzw. Beobachtungsrichtungen.

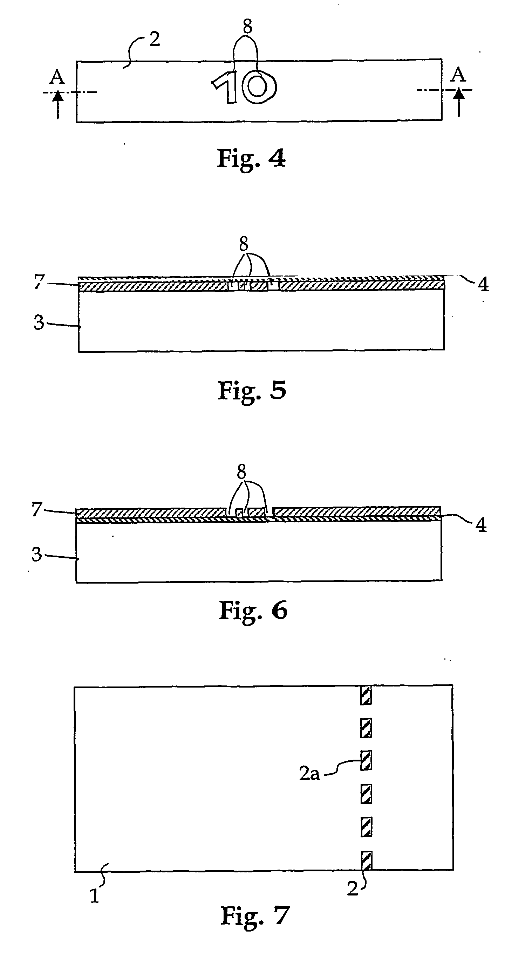

Die Figuren 4 bis 6 zeigen weitere bevorzugte Ausführungsformen, wobei Figur 4 ein Sicherheitselement 2 in Draufsicht zeigt, wohingegen die Figuren 5 und 6 das Sicherheitselement im Querschnitt entlang der strichpunktierten Linie A - A zeigen, um den Schichtaufbau des Sicherheitselements 2 zu verdeutlichen.

Figur 4 zeigt ein Sicherheitselement 2 mit Informationen 8. Diese Informationen können beispielsweise in Form von Klartext vorhanden sein, z. B. alphanumerische Zeichen.

Aus Figur 5 ist ersichtlich, daß das Sicherheitselement 2 aus einem Substrat 3, z. B. einer transparenten Kunststofffolie, einer Metallschicht 7, die auf das Substrat 3 z. B. aufgesputtert, aufgedampft, aufgeklebt usw. sein kann, und in den Bereichen der Informationen 8 kein Metall aufweist, sowie einer auf der Metallschicht aufgebrachten lyotrope flüssigkristallinen Schicht 4. Die in der Metallschicht 7 von den Informationen 8 gebildeten Aussparungen können mittels eines Füllmaterials, z. B. transparentem Kunststoff, aufgefüllt sein.

In Figur 6 ist eine Variante des in Figur 5 dargestellten Sicherheitselements 2 gezeigt, bei dem auf dem Substrat 3 zuerst die lyotrope flüssigkristalline Schicht 4 aufgebracht ist. Auf dieser ist die Metallschicht 7 angeordnet.

Die in den Figuren 5 und 6 beschriebenen Ausführungsformen des Sicherheitselements 2 können weitere Bestandteile aufweisen, z. B. die oben beschriebene Schutzschicht, Klebeschicht. Ebenso ist es möglich, das Sicherheitselement 2 direkt auf einer Banknote 1 herzustellen, das Substrat der Banknote 1 bildet dann das Substrat des Sicherheitselements.

Die oben beschriebenen optischen Effekte bei einem Sicherheitselement 2 nach Figur 5 bei Transmission nur im Bereich der Informationen 8 zu beobachten. Bei einem Sicherheitselement nach Figur 6 sind die beschriebenen optischen Effekte sowohl bei Transmission als auch bei Remission nur im Bereich der Informationen 8 zu beobachten.

Eine weitere Ausführungsform einer Banknote 1 mit Sicherheitselement 2 ist in Figur 7 dargestellt. Das Sicherheitselement 2 ist dabei zumindest teilweise in das Substrat der Banknote 1 eingebettet, so daß das Sicherheitselement 2, das z. B. ein Sicherheitsfaden ist, nur in bestimmten Bereichen 2a, sogenannten "Fenstern", sichtbar ist. Die oben beschriebenen optischen Effekte sind dann nur in den Bereichen 2a sichtbar.

Das Sicherheitselement kann auch als Transfermaterial ausgestaltet sein, mit einem Aufbau wie anhand der Figuren 1 bis 6 beschrieben. In diesem Fall wird der Schichtaufbau in umgekehrter Reihenfolge auf ein Transfermaterial aufgebracht. Das Sicherheitselement wird dann mittels des Transfermaterials auf die Banknote aufgebracht und das Transfermaterial danach ganz oder teilweise entfernt.

Wie bereits angedeutet, kann das Sicherheitselement weitere Schichten oder Bestandteile aufweisen, dabei können die zusätzlichen Schichten einzeln oder in Kombination verwendet werden, die Schichten können das gesamte Sicherheitselement bedecken oder nur Teile davon.

Beispielsweise kann unter der polarisierenden flüssigkristallinen Schicht eine fluoreszierende Schicht oder fluoreszierende Bereiche angeordnet sein. Abgestrahltes Fluoreszenzlicht ist dann linear polarisiert.

Ebenso können Interferenzschichten über oder unter der polarisierenden flüssigkristallinen Schicht angeordnet sein. Verwendet man den oben beschriebenen Analysator, ändert sich die Farberscheinung, wenn der Analysator gedreht wird. Ist die polarisierende flüssigkristalline Schicht strukturiert mit unterschiedlichen Ausrichtungen versehen, werden auf der Interferenzsicht die durch die Struktur vergebenen Muster oder Zeichen sichtbar.

Es ist auch möglich, Interferenzpigmente herzustellen. Dazu werden auf derartige Interferenzschichten ein- oder beidseitig flüssigkristallinen Schichten aufgebracht. Der so gebildete Schichtverbund wird in Pigmente zerkleinert, die polarisierend sind. Die so gebildeten polarisierenden Interferenzpigmente können, auch in Mischung mit nicht polarisierenden Interferenzpigmenten, für die Herstellung von Sicherheitselementen verwendet werden und auf diese beispielsweise aufgedruckt werden. Diese zeigen dann neben der Richtungsabhängigkeit der Farbe auch eine Polarisation des rückgestreuten Lichts.

Weiterhin kann das Sicherheitselement weitere polarisierende Sichten ebenso aufweisen, wie Beugungsstrukturen, die beispielsweise Hologramme bilden können.

Das Sicherheitselement kann ebenfalls eine phasenschiebende Schicht aufweisen, deren Nachweis mittels eines Phasenplättchens erfolgen kann.

Das Sicherheitselement kann auch als sogenannte Planchette ausgebildet sein, die bevorzugt an der Oberfläche des Banknoten-Substrats eingebracht wird, und ein- oder beidseitig mit polarisierenden Schichten versehen ist.

Erfindungsgemäß kann es auch vorgesehen sein, mindestens eine lyotrope flüssigkristalline Schicht auf einem Durchsichtfenster anzubringen. Unter Durchsichtfenster wird im Sinne der Erfindung ein Bereich in einer Banknote verstanden, der transparent oder zumindest durchscheinend ist. Das Durchsichtfenster kann beispielsweise vom Substrat der Banknote selbst gebildet werden, falls dieses aus Kunststoff besteht. Es ist aber auch möglich ein entsprechend gestaltetes Durchsichtfenster, z. B. eine Kunststofffolie, in das Papiersubstrat einer Banknote einzubringen oder auf dieser anzubringen, so daß diese ein Loch im Papiersubstrat überspannt. Das Durchsichtfester kann ganz oder partiell mit lyotropen Flüssigkristallen beschichtet sein. Die Schicht kann auch unterschiedliche Ausrichtung aufweisen, bzw. eine Bildinformation enthalten. Es kann auch vorgesehen sein, eine lyotrope flüssigkristalline Sicht auf beiden Oberflächen des Durchsichtfensters aufzubringen. Werden diese so angeordnet, daß ihre Polarisation um 90° gedreht ist, wird der oben beschriebene Farbeffekt maximiert.

In einer anderen Ausgestaltung kann die Folie des Durchsichtfensters doppelbrechend sein. Dann ergibt sich die oben beschriebene richtungsabhängige Linear- oder Zirkularpolarisation des transmittierten Lichts je nachdem, ob die Durchstrahlung von der Schicht- oder von der Folienseite erfolgt.

Das Durchsichtfenster kann auch Beugungsstrukturen aufweisen, die z. B. ein semitransparentes Hologramm bilden.

Wie oben beschrieben, kann das Sicherheitselement 2 direkt auf der Banknote 1 hergestellt oder als separates Sicherheitselement 2 zur Verfügung gestellt und auf der Banknote 1 befestigt werden. Es kann aber auch vorgesehen sein, ein separates Sicherheitselement 2 vorzusehen, dessen Aufbau erst vervollständigt wird, z. B. mit einer polarisierenden Sicht oder einer Schutzschicht versehen wird, nachdem das Sicherheitselement 2 auf der Banknote 1 befestigt wurde.

Nachfolgend werden Kombinationen von verschiedenen Polarisierungen (z. B. zirkular durch Einsatz von weiteren Phasenschiebern) wie auch die Kombination mit optischen Effekten wie Brechung, Beugung, Lumineszenzen und/ oder Interferenz sowie Ausführungsformen und konkrete Anwendungen der lyotropen Flüssigkristalle beschrieben, die auf anisotroper Polarisierbarkeit beruhen. Unter anisotroper Polarisierbarkeit ist zu verstehen, daß der Brechungsindex n von flüssigkristallinen und/ oder selbstassemblierenden flüssigkristallinen Materialien sowohl Dispersion aufweist, also eine Wellenlängenabhängigkeit $n(\lambda)$, wie auch eine spatiale Anisotropie $n_{xy}=n(x,y)$, also Doppelbrechung. Durch Verknüpfen dieser Eigenschaften von $n(\lambda,x,y)$ können besonders vorteilhafte Sicherheitselemente und/ oder Wertgegenstände kreiert werden.

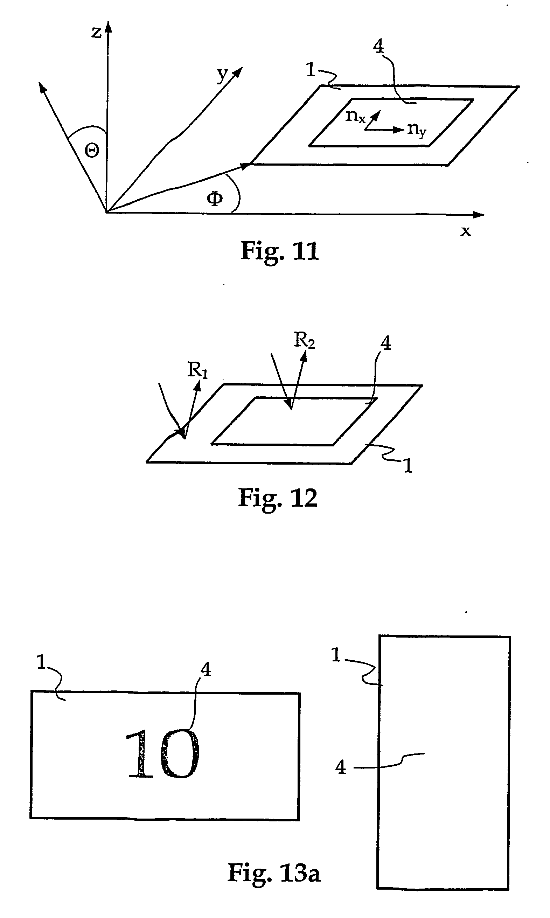

Diese Eigenschaft ist aus Figur 11 ersichtlich. Nachfolgend wird von einem Wertgegenstand ausgegangen, z. B. einer Banknote mit einem Substrat 1. Das Substrat 1 setzt sich aus einem Banknotenpapier 1 und einer darauf eventuell aufgebrachten Schicht zusammen. Die Schicht kann eine Druckschicht sein, aber auch eine Folie, die ihrerseits wieder selektierte optische Eigenschaften aufweisen kann. Insbesondere kann es sich um geprägte Folien handeln, die einen Hologramm-Effekt aufweisen. Auf diesen Verbund ist eine doppelbrechende Schicht 3 aufgebracht, die bevorzugt aus lyotropen Flüssigkristallen besteht. Diese Schicht weist eine anisotrope Dispersion auf:

$$\vec{n} = \vec{n}(\lambda) = \begin{pmatrix} n_x(\lambda) \\ n_y(\lambda) \end{pmatrix}.$$

Der Effekt dieser Anisotropie ist, daß unter anderem auch azimuthale (oder Farbdreh-) Effekte auftreten. Bekannte Farbkipp-Effekte zeigen eine Abhängigkeit vom Betrachtungswinkel oder Polarwinkel $\Theta$. Azimuthal hingegen bedeutet eine Abhängigkeit vom Azimuthalwinkel $\Phi$. Anders ausgedrückt erhält man durch eine Drehung $\Phi$ des Wertgegenstands - und nicht durch eine Kippung $\Theta$ - einen optischen Effekt. Zum Beispiel bei hochbrechenden Komponenten (wird später näher beschrieben) erhält man bei einer bestimmten Lage des Wertgegenstands eine starke Reflexion, bei Drehung um 90° hingegen eine schwache, bzw. überhaupt keine, wenn der Brechungsindex des unterliegende Substrates mit dem der doppelbrechenden Schicht in einer Richtung nahezu übereinstimmt.

Materialien, die diese Eigenschaften zum Beispiel aufweisen sind Kristalle wie Kalkspat oder Perowskit-artige Verbunde, aber auch Flüssigkristalle im allgemeinen durch ihre Mannigfaltigkeit möglicher Ausrichtungen.

Erfindungsgemäß werden die zuvor beschriebenen lyotropen Flüssigkristalle verwendet.

Im besonderen sind die Eigenschaften der lyotropen Flüssigkristalle derartig einstellbar, daß diese folgende Eigenschaften aufweisen:

(i) Anisotrope hochbrechende Komponenten, d.h. $n_x$ >> $n_y$, beispielsweise $n_x$=2.5, $n_y$=1.5, demzufolge $\Delta n$=1, was in etwa dem Unterschied ZnS-Folie entspricht ($n_{ZnS}$=2.5, $n_{Folie} \cong 1,5$).

(ii) Gerichtete, polarisierte Fluoresenzenz, d.h. unter Beleuchtung mit UV-Licht fluoreszieren die lyotropen Flüssigkristalle mit definierter Polarisation.

(iii) Phasenschieber, d.h. durch Abstimmen der Dicke der Flüssigkristallschicht können $\lambda/n$-Phasenschiebende Schichten hergestellt werden. Besonders bevorzugt sind hierbei $\lambda/4$- und $\lambda/2$-Schichten.

(iv) Lineare Polarisierung, d.h. die lyotropen Flüssigkristalle polarisieren einfallendes Licht linear. Insbesondere können $n_x$ bzw. $n_y$ dispersiv, d. h. wellenlängenabhängig sein.

Die Orientierung, und damit auch die Polarisationsrichtung der lyotropen Flüssigkristalle wird z. B. durch den Druck-/Rakelvorgang vorgegeben, mit dem die lyotropen Flüssigkristalle auf die Schicht aufgebracht wird. Die Schicht als Teil des Sicherheitselementes oder Wertgegenstandes kann dabei Papier, Folie, Prägestrukturen oder Lack wie Schutz-, Präge- oder Heißsiegellack sein. Nach Verdunstung des Lösungsmittel soll sie Schichtdicken vorzugsweise im Bereich von 10 bis 1000 nm aufweisen. Besonders vorteilhaft ist, daß die Beschichtung mit lyotropen Flüssigkristallen sowohl vollflächig sein wie auch partiell aufgebracht sein kann. Ebenso möglich sind Verbunde aus mehreren, übereinander aufgebrachten Schichten. Es können auch Beschichtungen vorgenommen werden, bei denen die lyotropen Flüssigkristalle partiell unterschiedliche Orientierungen aufweisen.

Nachfolgend werden Anwendungsmöglichkeiten der oben angegebenen Eigenschaften der lyotropen Flüssigkristalle näher beschrieben, wobei sich die Einteilung nach diesen Eigenschaften richtet.

Material mit dichroitischen Eigenschaften hat einen Brechungsindex der für die Hauptachsen ungleich ist: $n_x \neq n_y$. Besonders vorteilhaft ist es, wenn der Unterschied $\Delta n \equiv |n_x - n_y|$ der Brechungsindizes größer als 0,5 ist. Erfindungsgemäß besonders bevorzugt ist ein Unterschied von etwa 1, wie er z. B. auch bei Schichten aus bedampftem ZnS auf Foliensubstrat auftritt.

Eine genauere Beschreibung dieser Eigenschaften erfolgt anhand von Figur 12. Ein Substrat 1 wird mit einer Schicht aus anisotropem hochbrechendem Material 4 beschichtet. Erfindungsgemäß werden hierbei Schichten aus lyotropen Flüssigkristallen verwendet. Der Reflexionsgrad $R_1$ unterscheidet sich stark vom Reflexionsgrad $R_2$, was das Auge eines Betrachters als deutlichen Helligkeitsunterschied wahrnimmt. Die allgemeine Abhängigkeit des Reflexionsgrades R von den Brechungsindizes an Grenzschichten zweier Medien mit den Brechungsindizes $n_1$ und $n_2$ ist, bei senkrechter Betrachtung, gegeben durch:

$$R = \frac{(n_2 - n_1)^2}{(n_2 + n_1)^2}$$

Wird nun eine Schicht, die erfindungsgemäß auch partiell aufgebracht werden kann, zur Darstellung einer Ziffer oder eines Buchstabens, oder auch eines allgemeinen Musters oder Motivs benutzt, so kann man durch azimuthale Drehung des Substrates (also um den Winkel Φ, siehe Figur 1) mit der aufgebrachten Schicht einen deutlichen Helligkeitsunterschied feststellen.

Dieser Zusammenhang ist aus Figur 13a ersichtlich, in der auf einem Substrat 1 eine Schicht 4 aus anisotropen lyptropen Flüssigkristallen aufgebracht ist. Unter einem ersten Winkel erscheint das Symbol, hier eine 10, z. B. die Denomination einer Banknote, deutlich hervorgehoben vom Untergrund. Dreht man die Banknote um einen Winkel 90° nach links oder rechts, so wird durch die Anisotropie der hochbrechenden Schicht der subjektive Helligkeitsunterschied durch dann ähnliche Reflexionsgrade nahezu verschwinden. Die 10 ist dann für das Auge des Betrachters nahezu vom Untergrund nicht mehr zu unterscheiden.

Besonders bevorzugt ist eine Form, in der ein Index des Vektors $\vec{n}$, z. B. $n_y$, in etwa gleich dem Brechungsindex des Substrats ist. Erfindungsgemäß auch möglich ist, daß unter der Ziffer 10 eine weitere Schicht mit einem Brechungsindex aufgebracht wird, die dann $n_y$ ähnlich ist, sich aber vom Brechungsindex des Substrats deutlich unterscheidet.

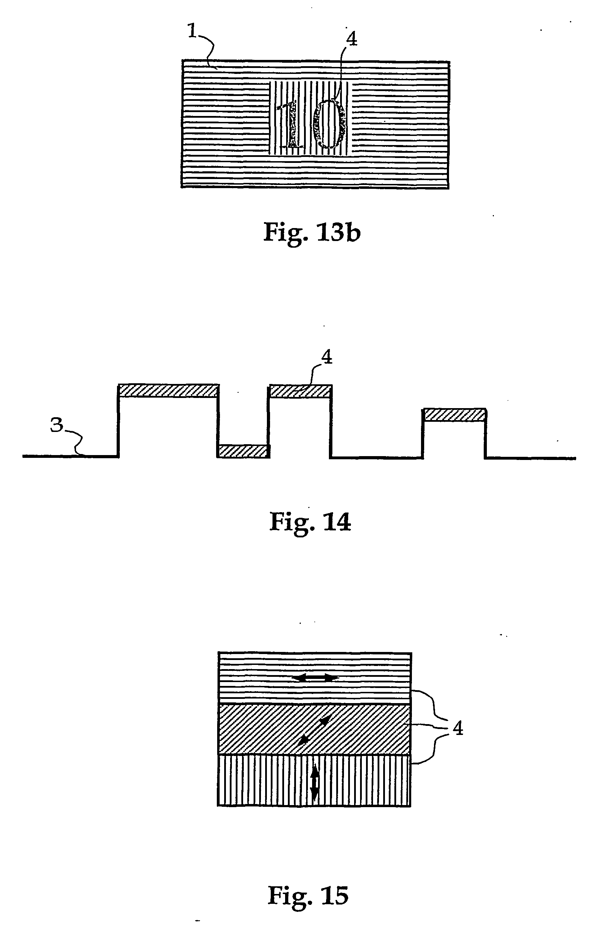

Eine besonders vorteilhafte Ausführungsform sieht vor, daß der Untergrund mit einer lyotropen Flüssigkristallschicht 4' versehen wird, die eine waagerechte Vorzugsorientierung aufweist; die Ziffer hingegen, wie in Figur 13b dargestellt, wird mit einer senkrechten Vorzugsorientierung 4 beschichtet. Besonders vorteilhaft in diesem Zusammenhang wird ein absorbierender Untergrund benutzt, auf dem die Anisotropien durch entsprechende Änderung des Reflexionsgrades besonders gut erkennbar sind. Ebenso möglich ist eine dichroitische Beschichtung mit stark unterschiedlichen Brechungsindizes in den beiden Hauptachsen, deren Hauptachsen in unterschiedlichen Bereichen in verschiedenen Winkeln zueinander stehen. Dann werden in Auflicht betrachtet, je nach Azimutwinkel, unterschiedliche Bereiche im Kontrast hervortreten und andere Bereiche in den Hintergrund treten. Folgende Varianten und Ausführungsformen sind hierzu ebenfalls möglich:

In einer Banknote mit Durchsichtfenster, das z. B. aus einer Folie gefertigt ist, erkennt man im Auflicht unter einem Azimuthalwinkel ein Motiv, z. B. eine Zifferung wie die Denomination der Note oder auch ein Ländermotiv, die Nachstellung eines Motives auf der Note oder auch eine replizierende Darstellung des Wasserzeichens. Dreht man nun die Note um einen Winkel, z. B. 90°, so wird das Durchsichtfenster vollständig transparent. Selbstverständlich ist dieses Beispiel nicht beschränkt auf ein Papiersubstrat mit einem Folienfenster, sondern beinhaltet auch Folienbanknoten mit einer transparenten nicht bedruckten Schicht, die als Durchsichtfenster fungiert und auf die die lyotrope Flüssigkristallschicht aufgebracht wird.

Besonders vorteilhaft ist auch die Nutzung zur Selbstauthentifizierung in einer Banknote mit Durchsichtfenster. Hierbei ist erfindungsgemäß möglich, daß eine Folie, die das Durchsichtfenster bildet, zumindest zwei Bereiche aufweist, in denen lyotrope Flüssigkristallschichten mit unterschiedlicher Vorzugsrichtung aufgebracht werden, die dann als Linearpolarisator wirken. Ein Sicherheitsmerkmal auf der Banknote, z. B. ein Druckmotiv, kann dann Bereiche aufweisen, in denen Licht linear polarisiert reflektiert wird, und andere Bereiche, in denen dies nicht geschieht. Durch Umklappen der Banknote kann das Durchsichtfenster über diese Bereiche gebracht werden, um eine Selbstauthentifizierung durchzuführen. Mittels kleiner Bereiche unterschiedlicher Orientierung und fein abgestufter Orientierungsrichtungen kann dabei ein Graustufenbild hinterlegt werden, welches sichtbar wird, wenn das derart beschichtet Durchsichtfenster auf einen Bereich mit polarisierend reflektierender Beschichtung gehalten wird.

Als weitere Ausführungsform ist möglich, daß eine Druckschicht, ein Druckmotiv oder ganz allgemein ein Motiv oder Muster auf einer Banknote mit einer lyotropen Flüssigkristallschicht überzogen wird. Durch den anisotropen hochbrechenden-Effekt ist das überdruckte Motiv dann unter einem bestimmten Winkel für den Betrachter sichtbar und bei Drehung um z. B. 90° nicht.

Des weiteren ist es möglich, daß ein Prägelack auf einer Hologrammfolie oder einem Patch mit einer lyotropen Flüssigkristallschicht überzogen wird. Ebenso kann der Prägelack selbst aus lyotropen Flüssigkristallen bestehen bzw. dies enthalten.

Auch Schutzlacke können mit einer derartigen Schicht versehen werden oder selber aus lyotropen Flüssigkristallen bestehen.

Insbesondere ist eine Variante transparenter Hologramme möglich, indem nicht ZnS durch Aufdampfen, also einen relativ aufwendigen Prozeß, aufgebracht wird und so die hochbrechende Schicht bildet, sondern statt dessen eine Schicht lyotroper Flüssigkristalle. Besonders vorteilhaft ist die Ausgestaltung derart, daß durch Nutzen der Anisotropie der lyotropen Flüssigkristallschicht das Hologramm als Funktion des Azimuthalwinkels einmal gut sichtbar erscheint und einmal nicht sichtbar ist.

Eine weitere Ausführungsform sieht vor, daß Banknoten-Veredelungen, d. h. Beschichtungen der Banknotenoberfläche mit Lacken, partiell mit einer derartigen dichroitischen lyotropen Flüssigkristallschicht versehen werden.

Besonders hervorgehoben werden soll die Benutzung einer derartigen dichroitischen lyotropen Flüssigkristallschicht für die Beschichtung von Karten, z. B. Chipkarten. Insbesondere für Displays, die in Scheck-, Geld- oder Kreditkarten eingebracht werden, ist die Benutzung einer derartigen Schicht von Vorteil.

Weitere Ausführungsformen von Sicherheitselementen und/oder Wertgegenständen ergeben sich bei Verwendung von sogenannten Gittern nullter Ordnung. Diese sind hochaufgelöste Beugungsstruktur, deren Beugungsmaximum nullter Ordnung unterhalb der Betrachtungsebene erscheint. Durch (partielles) Bedampfen einer hochtransparenten aber stark refraktiven ZnS-Schicht wird erreicht, daß sich unter anderem Farbkippeffekte beim Betrachter darstellen. Erfindungsgemäß werden die ZnS-Schichten durch eine lyotrope Flüssigkristallschicht ersetzt, wobei die Anisotropie des Brechungsindexes wiederum zu einem Farbänderungseffekt führt, wenn der Betrachter den Wertgegenstand azimuthal dreht. Veranschaulicht wird dies in Figur 14. Das Relief einer Beugungsstruktur wird z. B. durch galvanische Abformung und Verprägen in eine Folie 3 eingebracht die mit dem lyotropen Flüssigkristall 4 beschichtet ist.

Eine besonders vorteilhafte Anwendung für Sicherheitselemente und Wertgegenstände stellt die Verwendung von Effekten dar, die auf einer gerichteten oder anisotropen, aber auch wellenlängenabhängigen Polarisation beruhen.

Beispielsweise zeigen einige lyotrope Flüssigkristalle im Bereich des nahen Infrarot bei etwa 1000 nm einen Sprung der Brechungsindizes in transversalen Richtungen. Dies bedeutet, daß $n_x$ z. B. bis etwa 1000 nm wesentlich kleiner ist als $n_y$. $n_y$ ändert sich dann aber bei etwa der gleichen Wellenlänge von sehr großen zu sehr kleinen Werten. Dieser Sprung kann z. B. mittels Sensoren detektiert werden, so daß eine automatische, maschinelle Überprüfung ermöglicht wird. Dieser Effekt kommt dadurch zustande, daß eine Vorzugsrichtung der lyotropen Flüssigkristalle durch eine starke elektronische Polarisierbarkeit gekennzeichnet ist, wohingegen in senkrechter Richtung hierzu Molekülschwingungen stärker ausgeprägt sind, was zu einem eher vibronischen Anregungsspektrum führt, das sich im Infraroten zeigt.

Zur maschinellen Detektion und Echtheitserkennung bei hoher Sicherheit kann die Eigenschaft ausgenützt werden, daß die betreffenden Sicherheitselemente im sichtbaren Wellenlängenbereich polarisierend reflektieren bzw. transmittieren. Genau senkrecht zu dieser Vorzugsrichtung ist die polarisierte Reflexion bzw. Transmission im Infraroten. Maschinell kann dies bei hoher Geschwindigkeit und geringem Aufwand mit entsprechenden Beleuchtungen mit polarisiertem Licht überprüft werden.

Ebenso können Farbfilter erzeugt werden, die eine wellenlängenselektive Polarisation aufweisen. Besonders bevorzugt ist dies auch in einer Banknote mit Durchsichtfenster einsetzbar, die im Zusammenhang mit der oben beschriebenen Selbstauthentifizierung genutzt werden kann.

Bestimmte lyotrope Flüssigkristalle zeigen bei Bestrahlung mit UV-Licht eine polarisierte Fluoreszenz. Unter Ausnutzung dieses Effektes ist eine Vielzahl von Sicherheitselementen und Wertdokumenten möglich.

In einer Banknote mit einem Durchsichtfenster ist möglich, daß das Durchsichtfenster von einer Folie gebildet wird. Diese Folie ist im allgemeinen transparent. Auf diese Folie wird eine lyotrope Flüssigkristallschicht aufgebracht, die bei Anregung mit UV-Licht fluoresziert. Besonders vorteilhaft ist, daß unter Verwendung eines zusätzlichen Linearpolarisators, z. B. einer Polarisationsfolie, Teile des mit lyotropen Flüssigkristallen beschichteten Bereiches erscheinen, andere Teile dieses Bereichs nicht. Dies ist abhängig von der relativen Lage der Achse der polarisierenden lyotropen Flüssigkristallschicht zu der Lage der Achse des Linearpolarisators. Besonders vorteilhaft ist hierbei eine Ausgestaltung, bei der wie in Figur 15 durch Pfeile dargestellt, die lyotrope Flüssigkristallschicht 2 zwei oder mehr Polarisationsrichtungen nebeneinander aufweist. Durch Drehen eines Polarisators unter UV-Licht lassen sich so schwer fälschbare Hell-Dunkel-Kontraste erzielen.

Darüberhinaus ist möglich, daß man in Kombination mit einem entsprechenden Farbfilter nicht nur einen Hell-Dunkel-Effekt durch Drehen eines Polarisators als Prüfeinheit erzeugt, sondern auch einen Farbeffekt. Besonders bevorzugt wird die Variante, daß der Farbfilter selber aus lyotropen Flüssigkristallen mit wellenlängenselektiver Polarisation gebildet wird.

Eine weitere Gestaltungsform kann ein Sicherheitsfaden, eine auf der Oberfläche angebrachter metallisierter Streifen, eine Planchette oder ein Patch sein, die mit einer polarisierenden fluoreszierenden lyotropen Flüssigkristallschicht versehen werden. Bei Bestrahlung mit UV-Licht, und einem Polarisator als Prüfelement, kann man dann, je nach Aufbringung der Schichten, optische Farbeffekte erzeugen, die auch für eine automatische, maschinelle Überprüfung geeignet sind.

Eine weitere Form können fluoreszierende und gleichzeitig polarisierende Planchetten sein, die unter Benutzung von UV und Linearpolarisator Farb-Flip-Effekte erzeugen.

Ebenfalls möglich ist es Druckschichten mit einer derartigen Schicht zu überziehen, ebenso wie Pigmente und/ oder Melierfasern beim Verspinnen oder vor dem Schneiden.

Eine weitere Eigenschaft von dichroitischen lyotropen Flüssigkristallschichten ist die Möglichkeit, Phasenplättchen zu Realisieren. Diese sind allgemeinen dadurch gekennzeichnet, daß sie eine linear polarisierte E-Feld-Schwingung entlang der beiden optischen Hauptachsen mit einer Phasendifferenz versehen, die sich nach Heraustreten aus der Schicht durch eine Phasenverschiebung zwischen eintretender und austretender Welle darstellt. Die austretende Welle ist im allgemeinen elliptisch polarisiert ($\lambda/n$-Plättchen). Besonders vorteilhaft ist eine Phasendifferenz von $\pi/2$ oder $\lambda/4$, was einem sogenannten $\lambda/4$-Plättchen entspricht.

Nachfolgend werden verschiedene Ausführungsformen von Phasenplättchen beschrieben.

Eine Banknote mit Durchsichtfenster enthält eine Kombination von Folie als Substrat, z. B. einer 6 $\mu$m Kaschierfolie aus PET, die nahezu frei von Doppelbrechung ist, einem Linearpolarisator und einem $\lambda/4$-Plättchen. Letztere werden hierbei aus lyotropen Flüssigkristallen hergestellt. Besonders vorteilhaft ist dabei, daß die Dicke des zusammengesetzten Durchsichtfensters mit den beiden lyotropen Flüssigkristallschichten lediglich einige $\mu$m beträgt. Werden nun auf der Banknote cholesterische Flüssigkristallpigmente aufgebracht, kann diese selbstauthentifizierend erkannt werden, z. B. durch das oben beschriebene Umklappen des Durchsichtfensters. Besonders bevorzugt ist die Hinterlegung einer Bildinformation in der cholesterischen Flüssigkristallschicht durch eine Pixelung in links- bzw. rechts-helikale Pixel.

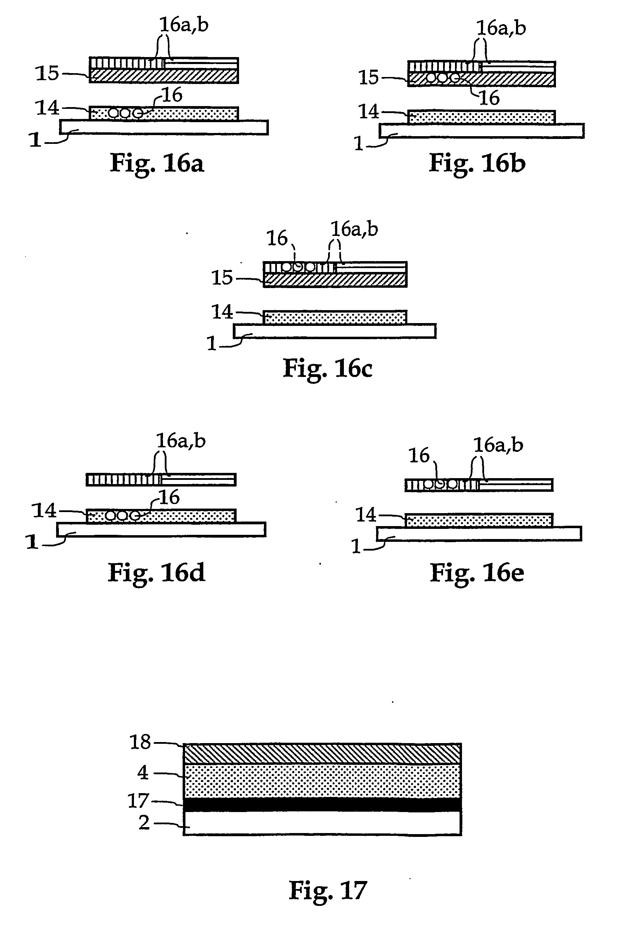

In diesem Zusammenhang kann besonders bevorzugt sowohl das $\lambda/4$-Plättchen als auch der lineare Polarisator strukturiert sein. Veranschaulicht wird dies in Figur 16, welche eine umgeklapptes Durchsichtfenster darstellt. Hierbei ist auf dem Substrat 1 (Papier oder Folie) eine Flüssigkristallschicht 4 aufgebracht. Die Flüssigkristallschicht 14 kann dabei aus cholesterischen Flüssigkristallen aufgebaut sein, die einen zusätzlichen Farbkippeffekt aufweist, sie kann aber auch aus nematischen oder smektischen Flüssigkristallen aufgebaut sein. In beiden Fällen kann durch Umklappen des Durchsichtfensters eine selektive Bildinformation angezeigt werden. Das Durchsichtfenster besteht hierbei wie oben beschrieben aus einem $\lambda/4$-Plättchen 15, ausgebildet durch eine lyotrope Flüssigkristallschicht sowie einem ebenfalls aus lyotropen Flüssigkristallen bestehenden, strukturierten linearen Polarisator 16a, b der Bereiche verschiedender Polarisationsrichtung 16a und 16b aufweist.

In Figur 16 sind mögliche Ausführungsformen dargestellt. Wie in Figur 16a gezeigt, ist auf dem Substrat 1 ist eine cholesterische Flüssigkristallschicht 14 aufgebracht. Diese zeigt einen Farbkippeffekt. Zusätzlich hierzu ist in der Flüssigkristallschicht 14 eine Bildinformation 16, z.B. ein Porträt eingebracht, indem Bereichsweise linksdrehende und rechtsdrehende cholesterische Flüssigkristalle abwechseln. Das Durchsichtfenster besteht in diesem Fall aus einem $\lambda/4$-Plättchen 15 und einem Linearpolarisator 16a, b. Im in Figur 16b dargestellten Fall ist die Bildinformation lediglich im $\lambda/4$-Plättchen 15 hinterlegt. In Figur 16c ist die Bildinformation im Linearpolarisator 16a hinterlegt. Der in Figur 16d dargestellte Fall zeigt eine Flüssigkristallschicht 14 die aus nematischenen und/ oder smektischenen Flüssigkristallen besteht und in der die Bildinformation 16 hinterlegt ist. Schließlich ist in Figur 16e die Bildinformation 16 im Linearpolarisator 16a hinterlegt. In den in den Figuren 16d, e dargestellten Fällen kann auf das $\lambda/4$-Plättchen verzichtet werden.

Ebenso können Wertgegenstände, z. B. Banknoten, mit mindestens zwei Durchsichtfenstern mit Polarisatoren, z. B. Folien mit lyotropen Flüssigkristallschichten, unterschiedlicher Orientierung ausgestattet werden. Werden derartige Durchsichtfenster, wie oben beschrieben, zum Zwecke der Authentifizierung umgeklappt, erhält man aufgrund der auf dem Wertgegenständen vorhandenen Sicherheitselemente, z. B. lyotropen Flüssigkristallschichten, Informationen, die sonst nur durch Drehung eines Polarisators sichtbar werden.

Eine weitere Einsatzmöglichkeit für lyotrope Flüssigkristalle stellt die Herstellung von Interferenzschichten dar. Interferenzschichten bestehen in der Regel aus einem reflektierenden Substrat, normalerweise mit Aluminium bedampfte Folie, einer Dielektrikumsschicht, z. B. evaporiertes $SiO_2$ oder $MgF_2$ und einem halbdurchlässigen Absorber, meistens einer Chromschicht. Die Interferenz wird durch die in der Dielektrikumsschicht zurückgelegte optische Weglänge $n \cdot \lambda$ hervorgerufen. Bei der Verwendung einer lyotropen Flüssigkristallschicht als Dielektrikumsschicht ergibt sich aber für die Brechung eine richtungsabhängige Funktion $n = n(x,y)$, was wiederum bedeutet, daß die richtungsabhängige Änderung des Brechungsindexes n eine richtungsabhängige Interferenz hervorruft. Also ändert sich die Farbe im Auge eines Betrachters mit dem Azimuthalwinkel Φ. Figur 17 zeigt die Verwendung einer lyotropen Flüssigkristallschicht in eine Sicherheitselement. Eine Folie 2, ist mit einem reflektierenden Material 17 bedampft, z. B. Aluminium. Danach folgt die lyotrope Flüssigkristallschicht 4 als Dielektrikum und eine Absorberschicht 18, z. B. aus Chrom.

Mehrere Ausführungsformen sind möglich. Beispielsweise kann ein Sicherheitsfaden, ein breiter Sicherheitsfaden oder auch ein Fensterfaden derart ausgebildet werden, daß er unter verschieden Azimuthalwinkeln verschiedene Farben reflektiert. Dies ist ein entscheidender Unterschied zu bekannten Farbkippeffekten, die durch Drehung des Polarwinkels zustande kommen. Ebenso möglich ist es, derartige Sicherheitselemente auf der Oberfläche von Wertgegenständen aufzubringen, z. B. als Patch. Des gleichen möglich sind Druckbereiche, die auch strukturiert sein können und/ oder Motive aufweisen können, die auf einem reflektierenden Untergrund aufgebracht werden. Bringt man auf diese Schichten eine lyotrope Flüssigkristallschicht auf und deckt diese Anordnung mit einem Absorber ab, so werden die beschriebenen Farbdreheffekte ebenfalls erreicht.

Als weitere Ausführungsform sind auch Multischichten mölgich. Insbesondere eine Schichtabfolge lyotroper Flüssigkristall - Dielektrikum - lyotroper Flüssigkristall, wobei das Dielektrikum vorteilhaft von niedrigbrechenden Materialien gebildet wird, z. B. von $SiO_2$ oder $MgF_2$. Die Orientierung der beiden lyotropen Flüssigkristallschichten kann senkrecht zueinander stehen, oder auch in jedem beliebigen Winkel. Auf diese Weise können Farbkippeffekte erzeugt werden, die zusätzlich von der Orientierung abhängig sind, also sowohl vom Polarwinkel Θ als auch vom Azimuthalwinkel Φ. Es sind auch Aufbauten von mehreren Schichten lyotroper Flüssigkristall möglich, wobei die Flüssigkristallschichten jeweils um 90° zueinander versetzt sind, d. h. auf eine Flüssigkristallschicht mit einer Orientierung von 0° folgt eine Flüssigkristallschicht mit einer Orientierung von 90°, auf diese wieder eine Flüssigkristallschicht mit 0° usw. Wird eine größere Anzahl dieser Flüssigkristallschichten (mindestens drei) aufgebracht, entstehen ebenfalls Farbkippeffekte. Die lyotropen Flüssigkristallschichten können auch in diesen Fällen strukturiert sein.

Für alle vorgenannten Ausführungsformen und Beispiele ist in der Regel eine Kaschierung mit einer Folie oder ein Laminieren erforderlich. Auch sind die Substrate in der Regel Folien aus Polymeren. Diese Polymere werden bei der Folienherstellung gereckt und erhalten so eine intrinsische Vorzugsrichtung, was zu - ungewollten - polarisierenden und dichroitischen Effekten führen kann. Jedoch können diese an sich ungewollten optischen Eigenschaften, wie Doppelbrechung, Polarisation oder farbfilternde Effekte, gezielt in Kombination mit den lyotropen Flüssigkristallschichten kombiniert werden, um auf besonders vorteilhafte Weise die oben beschriebenen, gewünschten optischen Effekte zu erzeugen.

Ansonsten wird die Verwendung von Folien bevorzugt, die sich optisch neutral verhalten, d. h. keine optischen Effekte wie z. B. Doppelbrechung zeigen. Eine derartige Folie wird beispielsweise unter der Bezeichnung Topas-800™ von der Firma Ticona vertrieben. Diese Folie besteht aus cyclischen Olefin-Copolymeren, und kann zum Kaschieren und/ oder Laminieren und/ oder als Substrat verwendet werden. Auftretende optische Effekte können damit gezielt durch aufgebrachte lyotrope Flüssigkristalle festgelegt werden.

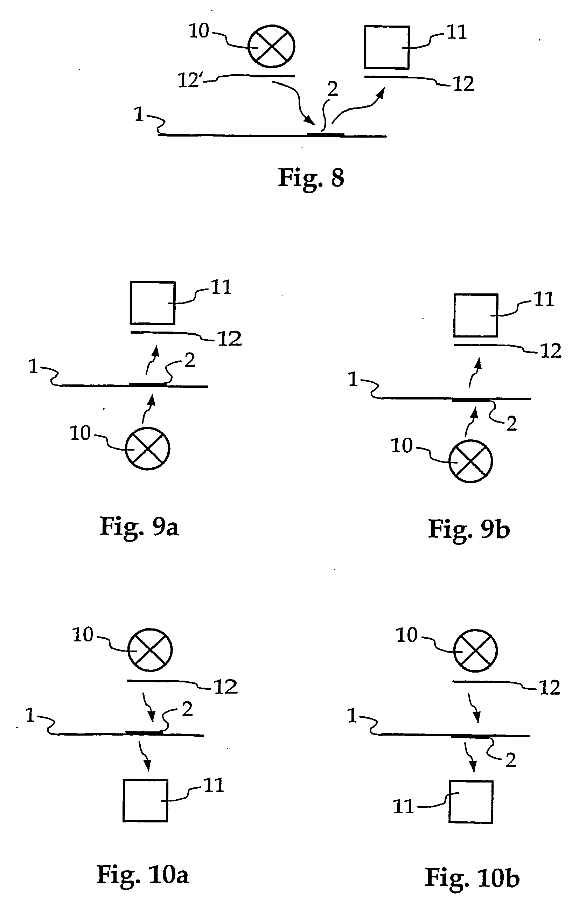

In den Figuren 8 bis 10 sind nicht erfindungsgemäße Vorrichtungen für die Überprüfung von Banknoten mit erfindungsgemäßem Sicherheitselement dargestellt.

Figur 8 zeigt eine Anordnung aus einer Lichtquelle 10, einem Detektor 11 und einer ein Sicherheitselement 2 aufweisenden Banknote 1, für die Überprüfung der Banknote 1 mittels von der Banknote 1 remittiertem Lichts. Das Licht der Lichtquelle 10 dringt durch die linear polarisierende Schicht des Sicherheitselements 2 und wird dabei linear polarisiert. Dieses Licht wird am Substrat der Banknote 1 gestreut und dadurch depolarisiert. Das gestreute Licht dringt durch die linear polarisierende Schicht des Sicherheitselements 2 und wird dabei erneut linear polarisiert. Mittels des Detektors 11 kann die Anwesenheit des Sicherheitselements 2 nachgewiesen werden, falls das detektierte Licht linear polarisiert ist. Anstelle der Polarisation oder zusätzlich, kann der oben beschriebene, durch die Art des verwendeten lyotropen Flüssigkristalls bestimmte, Farbeffekt des vom Sicherheitselement 2 stammenden Lichts durch den Detektor 11 ausgewertet werden. Wird vor der Lichtquelle 10 und/ oder vor dem Detektor 11 ein Polarisator 12 bzw. 12' eingesetzt, der eine Linearpolarisation aufweist, die zu der Linarpolarisation des Sicherheitselements 2 um 90° gedreht ist, wird der Farbeffekt für das vom Sicherheitselement 2 stammende Licht verstärkt. Idealer Weise weisen die Polarisatoren 12 bzw. 12' eine linear polarisierende Schicht auf, die aus dem selben lyotropen Flüssigkristall besteht, wie die polarisierende Schicht des Sicherheitselements 2.

Figur 9a zeigt eine Anordnung aus einer Lichtquelle 10, einem Detektor 11 und einer ein Sicherheitselement 2 aufweisenden Banknote 1, für die Überprüfung der Banknote 1 mittels durch die Banknote 1 transmittiertem Lichts. Das Licht der Lichtquelle 10 dringt durch das Substrat der Banknote 1 und die linear polarisierende Schicht des Sicherheitselements 2. Dabei wird das Licht linear polarisiert. Mittels des Detektors 11 kann die Anwesenheit des Sicherheitselements 2 nachgewiesen werden, falls das detektierte Licht linear polarisiert ist. An Stelle der Polarisation oder zusätzlich kann der oben beschriebene, durch die Art des verwendeten lyotropen Flüssigkristalls bestimmte, Farbeffekt des vom Sicherheitselement 2 stammenden Lichts durch den Detektor 11 ausgewertet werden. Wird vor dem Detektor 11 ein Polarisator 12 eingesetzt, der eine Linearpolarisationbewirkt, die zu der Linarpolarisation des Sicherheitselements 2 um 90° gedreht ist, wird der Farbeffekt für das vom Sicherheitselement 2 stammende Licht verstärkt. Idealer Weise weist der Polarisator 12 eine linear polarisierende Schicht auf, die aus dem selben lyotropen Flüssigkristall besteht, wie die polarisierende Schicht des Sicherheitselements 2.

In Figur 9b liegt das Sicherheitselement 2 auf der Lichtquelle 10 zugewandten Seite der Banknote 1. Dann wird das hindurchgehende Licht durch Streuung im Substrat der Banknote 1 depolarisiert; im Detektor 11 beobachtet man keine Polarisation und keinen Farbeffekt. Das ist beispielsweise der Fall beim Fenster-Sicherheitsfaden an den Stellen, wo er in das Substrat eingebettet ist.

In Figur 10 sind Lichtquelle 10 und Detektor 11 gegenüber Figur 9 vertauscht. Figur 10a zeigt den Fall, bei welchem das Sicherheitselement 2 mit polarisiertem Licht beleuchtet wird und zumindest der Farbeffekt auch durch das streuende Banknotensubstrat 1 hindurch beobachtet werden kann, wohingegen das transmittierte Licht durch die Streuung am Substrat der Banknote depolarisiert wird. Figur 10b den Fall, bei dem in Transmission kein Effekt auftritt, da das Sicherheitselement 2 beleuchtende Licht unpolarisiert ist und die durch die polarisierende Schicht bewirkte lineare Polarisation durch Streuung im Banknoten-Substrat wieder depolarisiert wird.

Statt durch einen Detektor 11 kann die Überprüfung des Sicherheitselements 2 sowohl in Remission als auch in Transmission auch visuell durch eine Person erfolgen, welche das Eintreten des beschriebenen Farbeffekts überprüft. Durch das Drehen des Polarisators 12 bzw. 12' oder der Banknote relativ zu der durch die Beleuchtung oder die Beobachtung vorgegebenen Polarisationsrichtung kann zudem ein Zu- und Abnehmen des beschriebenen Farbeffekts beobachtet werden. Bei visueller Beobachtung von Fenster-Sicherheitsfäden oder anderen partiell in das Banknotensubstrat eingebetteten Sicherheitselementen ist zudem immer als Referenz ein Leereffekt vorhanden, d. h. Stellen ohne den beschriebenen Effekt.

Die visuelle Prüfung durch eine Person kann besonders vorteilhaft und einfach erfolgen, wenn das oben beschriebene Durchsichtfenster erfindungsgemäß mit einer polarisierenden Flüssigkristallschicht versehen ist. In diesem Fall kann das Durchsichtfenster den Polarisator 12 bzw. 12' ersetzen. Das Durchsichtfenster kann dann dazu verwendet werden, weitere auf derselben Banknote befindliche Sicherheitselemente zu überprüfen, z. B. indem die Banknote so gefaltet wird, daß das Durchsichtfenster über dem weiteren Sicherheitselement zu liegen kommt. Ebenso können mit dem Durchsichtfenster die Sicherheitselemente anderer Banknoten überprüft werden.

Auch die oben im Zusammenhang mit den polarisierenden Interferenzpigmenten beschriebenen Farbwechsel können beim Drehen des Polarisators 12 bzw. 12' besonders gut beobachtet werden.

Selbstverständlich ist es auch möglich, in den Figuren 9 und 10 sowohl vor der Lichtquelle 10 als auch vor dem Detektor 11 einen Polarisator als Analysator einzusetzen. In diesem Fall kann zumindest der Farbeffekt, unabhängig von der Lage des Sicherheitselements 2, immer beobachtet werden.

Die anhand der Figuren 9 und 10 beschriebene Überprüfung eines erfindungsgemäßen Sicherheitselements wurde für ein auf der Oberfläche des Substrats einer Banknote aufgebrachtes Sicherheitselement erläutert. Es ist offensichtlich, daß andere Gestaltungen möglich sind. Beispielsweise kann ein Substrat für die Banknote verwendet werden, das keine Streuung hervorruft, z. B. ein Kunststoffsubstrat. Ebenso kann das Sicherheitselement, wie oben beschreiben als Durchsichtfenster ausgebildet sein. In diesen Fällen tritt die im Zusammenhang mit der Beschreibung der Figuren 9 und 10 erörterte Depolarisierung durch das Substrat nicht auf.

Die Lichtquelle 10 kann eine Lichtquelle sein, die weißes, d. h. polychromatisches, Licht erzeugt, z. B. eine Glühlampe oder eine Gasentladungslampe. Die Lichtquelle 10 kann bereits mit einem Polarisator versehen sein, insbesondere einem Linear- oder Zirkularpolarisator. Die Lichtquelle 10 kann aber auch Licht mit einem bestimmten, begrenzten Spektrum erzeugen, z. B. wenn die Lichtquelle 10 von einer Leuchtdiode gebildet wird. Soll das Licht zudem bereits linear polarisiert sein, so ist eine polarisierende Laserdiode niedriger Leistung oder für visuelle Beobachtung ein Lasepointer als Lichtquelle verwendbar.

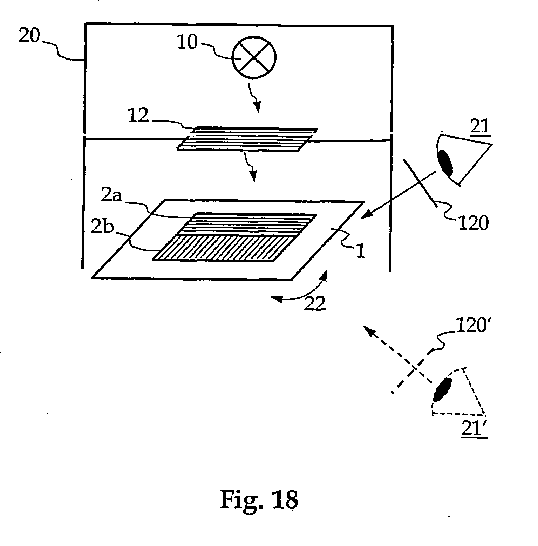

In Figur 18 ist eine nicht erfindungsgemäße Vorrichtung für die Prüfung von Wertgegenständen 1 mit einem Sicherheitselement 2 dargestellt. Die Vorrichtung weist ein Gehäuse 20 auf, in dem eine Lichtquelle 10 angeordnet ist, die bevorzugt polychromatisches Licht erzeugt. In dem Gehäuse ist außerdem ein Polarisator 12 angeordnet, der das Licht der Lichtquelle 10 bevorzugt linear oder zirkular polarisiert. Insbesondere für den Fall, daß das Sicherheitselement 2 eine Strukturierung mit unterschiedlich linear polarisierenden Bereichen 2a, 2b aufweist, wird durch ein Verdrehen 22 des Wertgegenstands 1 erreicht, daß es für die unterschiedlich polarisierenden Bereiche 2a, 2b zu einer Auslöschung oder einer Aufhellung und somit zu einem Hell-Dunkel-Kontrast kommt, der von einem Beobachter 21 besonders gut wahrgenommen werden kann. Je nach Gestaltung des Wertdokuments 1 bzw. des Sicherheitselements 2 kann der Hell-Dunkel-Kontrast in Remission 21 oder Transmission 21' wahrgenommen werden.

Ebenso ist es denkbar, daß das Sicherheitselement 2 derart gestaltet ist, daß ein Beobachter 21 bzw. 21' nur durch einen weiteren Linear- oder Zirkularpolarisator 120 bzw. 120' einen Hell-/Dunkelkontrast wahrnehmen kann.

Dieser zusätzliche Polarisator 120 bzw. 120' muß im Strahlengang zwischen dem Sicherheitselement 2 und dem Auge des Beobachter 21 bzw. 21' angebracht sein. Der weitere Polarisator 120 bzw. 120' kann insbesondere im Gehäuse 20 integriert sein.

Besonders vorteilhaft kann die beschriebene Vorrichtung beispielsweise an Kassen für die Überprüfung von Banknoten mit erfindungsgemäßen Sicherheitselementen 2 verwendet werden. Im Gegensatz zu bekannten Vorrichtung zur Überprüfung von Banknoten, die mit UV-Licht arbeiten, werden die Bediener der Kasse bzw. Vorrichtung keiner UV-Strahlung ausgesetzt.

**Patentansprüche**

1. Sicherheitselement zur Absicherung von Wertgegenständen, wobei das Sicherheitselement mindestens ein flüssigkristallines Material aufweist, **dadurch gekennzeichnet, dass** das flüssigkristalline Material eine lineare Polarisierung von Licht bewirkt und/oder dichroitisch mit richtungsabhängigem Brechungsindex wirkt, wobei das flüssigkristalline Material von einem lyotropen Flüssigkristall gebildet wird.

2. Sicherheitselement nach Anspruch 1, **dadurch gekennzeichnet, dass** das flüssigkristalline Material eine Schichtdicke von 10 bis 1000 nm aufweist.

3. Sicherheitselement nach Anspruch 1 oder 2, **dadurch gekennzeichnet, dass** das flüssigkristalline Material vollflächig oder bereichsweise aufgebracht wird, insbesondere in Form von alphanumerischen Zeichen und/oder Mustern.

4. Sicherheitselement nach einem der Ansprüche 1 bis 3, **dadurch gekennzeichnet, dass** der Träger des flüssigkristallinen Materials eine doppelbrechende Folie mit einer Phasenverschiebung ist.

5. Sicherheitselement nach einem der Ansprüche 1 bis 4, **dadurch gekennzeichnet, dass** der Träger des flüssigkristallinen Materials eine optisch neutrale Folie ist, insbesondere aus PET oder Olefin-Copolymeren.

6. Sicherheitselement nach einem der Ansprüche 1 bis 5, **dadurch gekennzeichnet, dass** das Sicherheitselement mindestens eine weitere optische Effekte erzeugende Schicht und/ oder eine Schutzschicht aufweist, welche zumindest einen Teil des Sicherheitselements bedecken.

7. Sicherheitselement nach einem der Ansprüche 1 bis 6, **dadurch gekennzeichnet, dass** das Sicherheitselement ein Sicherheitsfaden, ein Durchsichtfenster oder eine Planchette ist.

8. Wertgegenstand mit einem Sicherheitselement nach einem der Ansprüche 1 bis 6.

9. Wertgegenstand nach Anspruch 8, **dadurch gekennzeichnet, dass** das flüssigkristalline Material auf einen Untergrund aufgebracht wird, der Muster und/ oder Zeichen aufweist.

10. Verfahren zur Herstellung eines Sicherheitselementes, nach Anspruch 1, bei dem

- ein Substrat zur Verfügung gestellt wird,
- auf dieses Substrat mindestens ein lyotropes flüssigkristallines Material aufgebracht wird, wobei

das mindestens eine lyotrope flüssigkristalline Material in einer Lösung vorliegt, die unter Anwendung von gerichteter Scherkraft auf das Substrat aufgebracht wird, insbesondere durch einen Druck- und/ oder Rakelvorgang, und dass ein die Lösung bildendes Lösungsmittel entfernt wird.

**Claims**

1. A security element for securing objects of value, the security element having at least a liquid-crystalline material, **characterized in that** the liquid-crystalline material effects a linear polarization of light and/or has a dichroic effect with direction-dependent refractive index, wherein the liquid-crystalline material is formed by a lyotropic liquid crystal.

2. The security element according to claim 1, **characterized in that** the liquid-crystalline material has a layer thickness of 10 to 1000 nm.

3. The security element according to claim 1 or 2, **characterized in that** the liquid-crystalline material is applied over the full area or in some regions, in particular in the form of alphanumeric characters and/or patterns.

4. The security element according to any of the claims 1 to 3, **characterized in that** the carrier of the liquid-crystalline material is a double refractive foil with phase shift.

5. The security element according to any of the claims 1 to 4, **characterized in that** the carrier of the liquid-crystalline material is an optically neutral foil, in particular of PET or olefin copolymers.

6. The security element according to any of the claims 1 to 5, **characterized in that** the security element has at least one further layer producing optical effects and/ or a protective layer, which cover at least a part of the security element.

7. The security element according to any of the claims 1 to 6, **characterized in that** the security element is a security thread, a see-through window or a planchet.

8. An object of value having a security element according to any of the claims 1 to 6.

9. The object of value according to claim 8, **characterized in that** the liquid-crystalline material is applied on a background which has patterns and/or characters.

10. A method for manufacturing a security element according to claim 1, wherein

- a substrate is made available,
- on this substrate at least one lyotropic liquid-crystalline material is applied, wherein

the at least one lyotropic liquid-crystalline material is present in a solution that is applied on the substrate by applying directed shearing force, in particular by a printing and/ or doctoring operation, and that a solvent forming the solution is removed.

**Revendications**

1. Elément de sécurité destiné à la protection d'objets de valeur, l'élément de sécurité comportant au moins un matériau à cristaux liquides, **caractérisé en ce que** le matériau à cristaux liquides engendre une polarisation linéaire de lumière et/ou a un effet dichroïque avec indice de réfraction dépendant de la direction, le matériau à cristaux liquides étant constitué par un cristal liquide lyotrope

2. Elément de sécurité selon la revendication 1, **caractérisé en ce que** le matériau à cristaux liquides présente une épaisseur de couche de 10 à 1000 nm.

3. Elément de sécurité selon la revendication 1 ou 2, **caractérisé en ce que** le matériau à cristaux liquides est appliqué à pleine surface ou sur certaines zones, notamment sous forme de caractères alphanumériques et/ou de motifs.

4. Elément de sécurité selon une des revendications de 1 à 3, **caractérisé en ce que** le support du matériau à cristaux liquides est une feuille biréfringente à déphasage.

5. Elément de sécurité selon une des revendications de 1 à 4, **caractérisé en ce que** le support du matériau à cristaux liquides est une feuille optiquement neutre, notamment en PET ou copolymère oléfine.

6. Elément de sécurité selon une des revendications de 1 à 5, **caractérisé en ce que** l'élément de sécurité comporte au moins une couche supplémentaire générant des effets optiques et/ou une couche protectrice qui recouvrent au moins une partie de l'élément de sécurité.

7. Elément de sécurité selon une des revendications de 1 à 6, **caractérisé en ce que** l'élément de sécurité est un fil de sécurité, une fenêtre transparente ou une planchette.

8. Objet de valeur comprenant un élément de sécurité selon une des revendications de 1 à 6.

9. Objet de valeur selon la revendication 8, **caractérisé en ce que** le matériau à cristaux liquides est appliqué sur un fond qui comporte des motifs et/ou des caractères.

10. Procédé de fabrication d'un élément de sécurité selon la revendication 1, dans lequel

- un substrat est mis à disposition
- au moins un matériau à cristaux liquides lyotrope est appliqué sur ce substrat,

le au moins un matériau à cristaux liquides lyotrope se trouvant dans une solution qui, par utilisation de force de cisaillement orientée, est appliquée sur le substrat, notamment par un processus d'impression et/ou de raclage, et en ce qu'un solvant formant la solution est enlevé.

**Fig. 1**

**Fig. 2**

**Fig. 3**

**Fig. 4**

**Fig. 5**

**Fig. 6**

**Fig. 7**

**Fig. 8**

**Fig. 9a**

**Fig. 9b**

**Fig. 10a**

**Fig. 10b**

Fig. 11

Fig. 12

Fig. 13a

**Fig. 13b**

**Fig. 14**

**Fig. 15**

15 — 16a,b

14 — 16

1 —

**Fig. 16a**

15 — 16a,b

14 — 16

1 —

**Fig. 16b**

16 — 16a,b

15 —

14 —

1 —

**Fig. 16c**

16a,b

14 — 16

1 —

**Fig. 16d**

16 — 16a,b

14 —

1 —

**Fig. 16e**

18 —

4 —

17 —

2 —

**Fig. 17**

**Fig. 18**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19941295 A1
- EP 0435029 A2
- EP 1203968 A1
- US 5739296 A
- US 6049428 A
- WO 02087782 A1